# EUROPÄISCHE PATENTSCHRIFT

(11) **EP 0 476 415 B1**
(45) Veröffentlichungstag und Bekanntmachung des Hinweises auf die Patenterteilung: **08.11.1995**
(21) Anmeldenummer: 91114792.4
(22) Anmeldetag: 03.09.1991
(51) Int. Cl.: C08L 77/02

(54) **Polyamidmassen für Verpackungsmaterialien und ihre Verwendung**
Polyamide compositions for packing material and their use
Compositions de polyamide pour matériaux d'emballage et leur utilisation

(30) Priorität: 15.09.1990 DE 4029327
(43) Veröffentlichungstag der Anmeldung: 25.03.1992
(73) Patentinhaber: BAYER AG, 51368 Leverkusen (DE)
(72) Erfinder: Dujardin, Ralf, Dr., W-4150 Krefeld (DE); Dhein, Rolf, Dr., W-4150 Krefeld 1 (DE); Wandel, Martin, Dr., W-4047 Dormagen 11 (DE)

(56) Entgegenhaltungen:
- EP-A- 0 347 687
- DERWENT ACCESSION NO. 91-068 331, Questel Tele- systems (WPIL) DERWENTPUBLICATIONS LTD., London
- PATENT ABSTRACTS OF JAPAN, unexamined applications, C Field, Band 5, Nr. 71,13. Mai 1981 THE PATENT OFFICE JAPANESE GOVERNMENT Seite 135 C 54

## Beschreibung

Gegenstand der Erfindung sind kompostierbare Polyamidmassen für Verpackungsmaterialien, welche 5-25 Gew.-% eines Zusatzes von linearen, oligomeren aliphatischen Polyestern oder Polycarbonaten mit Molekulargewichten von 800-4000 enthalten. Diese Zusätze bestehen vorzugsweise aus Polyestern aus aliphatischen Diolen und Dicarbonsäuren, mit jeweils bis 10 C-Atomen oder aliphatischen Polycarbonaten mit bis zu 10 C-Atomen.

Es wird ferner die Verwendung entsprechender Mischungen für leicht abbaubare, kompostierbare Polyamidverpackungen beansprucht, insbesondere in Form von Folien oder dünnwandigen Spritzgußformteilen für (Lebensmittel)-Verpackungen.

Die Beständigkeit polymerer Werkstoffe gegenüber mikrobieller Schädigung ist neben den geforderten Materialeigenschaften eine Grundvoraussetzung für ihren Einsatz im Konstruktionsbereich. Bei solchen längerfristigen Anwendungen, wie z.B. von mehr als 10 Jahren in der Automobilindustrie, muß aus Sicherheitsgründen gewährleistet sein, daß die mechanischen Eigenschaften der Konstruktionswerkstoffe nicht durch Mikrobenbefall verschlechtert werden.

Bei Verpackungsmaterialien hingegen handelt es sich um kurzlebige Produkte, die nach Gebrauch weggeworfen werden. Die Anforderungen an ein Verpackungsmaterial bezüglich seiner mechanischen Beanspruchung durch Zu-, Druck- Biege- und Schlagbelastung sind aber genau so hoch wie bei den langfristigen Einsatzbereichen. Dementsprechend sind hohe Werte für Reißdehnung, Zug- und Biegefestigkeit, Elastizitätsmodul und die Schlagzähigkeit wichtige Auswahlkriterien für ein Polymer im Einsatzbereich Verpackungen. Diese ausgewählten mechanischen Eigenschaften führen aber dazu, das Kunststoff-Verpackungen trotz ihres geringen Gewichtes volumenmäßig einen großen Beitrag zum Abfallaufkommen liefern. Aus Gründen der Abfallverringerung wäre es also wünschenswert, Kunststoffe mit guten mechanischen Eigenschaften für den Verpackungsbereich zu haben, die unter bestimmten Umwelteinflüssen, wie z.B. direkte Sonneneinstrahlung und Feuchtigkeit oder Feuchtigkeit und Mikroben, abgebaut würden und deren Spaltprodukte anschließend von Mikroorganismen biologisch abgebaut würden.

Polyamide werden aufgrund ihrer guten mechanischen Eigenschaften als Verpackungsmaterialien in vielen Bereichen eingesetzt. Sie zeichnen sich durch hohe Reißdehnung, hohe Zug- und Biegefestigkeit aus.

Weiterhin weisen die Polyamide, vor allen Dingen solche auf Basis von Polycaprolactam oder Polyhexamethylenadipate auf Basis von aliphatischen Dicarbonsäuren und aliphatischen Diaminen mit 4 bis 6 Kohlenstoffatomen, oder Copolymeren aus diesen Bausteinen, aber eine hohe Resistenz gegenüber mikrobieller Schädigung auf und gelten daher als biologisch nicht abbaubar. Oligomere dieser Polyamide mit maximal fünf Wiederholungseinheiten sind bekanntenmaßen biologisch abbaubar (T. Fukumura in Plant Cell Physiologie, Vol. 7, 1966, Seite 93 und folgende sowie in Journal Biochemistry, Vol. 59, 1966, Seite 531 und folgende).

Die Aufgabe bestand darin, höhermolekulare Polyamide für Verpackungsmaterialien so zu modifizieren, daß sie ihre guten mechanischen Eigenschaften behalten, aber unter bestimmten Umwelteinflüssen leicht in biologisch abbaubare Bruchstücke zerfallen.

Die Kanadische Patentschrift 975 491 beschreibt photoabbaubare Polyamide, die Ketogruppen in der Seitenkette enthalten, wobei die Polymerkette Einheiten der folgenden Struktur aufweist. 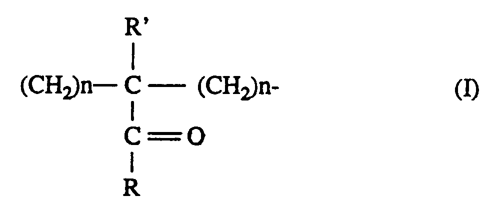
Die europäische Patentanmeldung EP 0 347 687 betrifft durch Einwirkung von ultraviolettem Licht abbaubare Copolyamide, die durch Copolymerisation mit Ketocarbonsäuren, der folgenden Struktur: 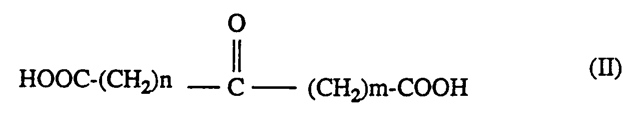
zugänglich sind.

Die vorstehend beschriebenen Problemlösungen weisen allerdings Nachteile auf. Zwar besitzen die hergestellten Copolymerisate eine relativ verbesserte photochemische Abbaubarkeit im Vergleich zu nicht modifizierten Polyamidsystemen, aufgrund der Ketonstrktur bilden sich aber mit dem vorhandenen Diamin bzw. zur ω-Aminocarbonsäure geöffnetem Lactam entsprechende Schiff'sche Basen, die zu Verfärbungen und gegebenenfalls auch zu Verzweigungen führen, die wiederum die mechanischen Eigenschaften und die Abbaubarkeit verschlechtern. Weiterhin müssen die eingesetzten Monomeren speziell hergestellt werden.

Überraschenderweise wurde gefunden, daß Mischungen aus hochmolekularen aliphatischen Polyamiden und aliphatischen Polyestern oder Polycarbonaten mit Molekulargewichten von 200-4000, vorzugsweise 1000 bis 3000 g/mol hervorragende mechanische Eigenschaften aufweisen und zusätzlich eine verbesserte Abbaubarkeit aufweisen. Weiterhin zeigen die erfindungsgemäßen Polyamid-Mischungen die oben genannten Nachteile nicht auf, da sie aus in technischen Mengen verfügbaren Komponenten durch einfaches Vermischen herstellbar sind.

Gegenstand der vorliegenden Erfindung sind abbaubare aliphatische Polyamid-Kompositionen auf Basis von ω-Aminocarbonsäuren bzw. ihren Lactamen insbesondere Polycaprolactam oder Polyamiden auf Basis von aliphatischen Dicarbonsäuren und aliphatischen Diaminen mit jeweils 4 bis 6 Kohlenstoffatomen, oder Copolymeren aus diesen Bausteinen, durch Zusatz von linearen oder auf Basis von Trimethylolpropan aufgebauten oligomeren, aliphatischen Polyestern oder Polycarbonaten mit Molekulargewichten von 800-4000 (vorzugsweise 1000-3000), in Mengen von 5 bis 25 Gew.-%, vorzugsweise 10 bis 20 Gew.-%.

Die Polyamide sind vorzugsweise solche auf Basis ε-Aminocaprosäure bzw. Caprolactam oder aus Adipinsäure und 1,6-Hexamethylendiamin und Copolymere aus diesen beiden, gegebenenfalls unter Verwendung eines weiteren cycloaliphatischen Diamins, wie z.B. 3,3,5-Trimethyl-4-aminomethylcyclohexylamin. Die mittleren Gewichtsmolekulargewichte dieser Polyamide liegen im Bereich von M_{w}=12.000 bis 1.000.000, vorzugsweise im Bereich von M_{w}=30.000 bis 800.000.

Geeignete oligomere, aliphatische Polyester sind solche, die ein Molekulargewicht von 800-4000, vorzugsweise 1000-3000 g/mol aufweisen und entweder aus aliphatischen Diolen und Dicarbonsäuren mit jeweils bis zu 10 Kohlenstoffatomen bestehen oder aliphatische Polycarbonate aus Diolen mit bis zu 10 Kohlenstoffatomen darstellen. Vorzugsweise besitzen sie überwiegend Hydroxyendgruppen.

Geeignete Diole sind beispielsweise Ethylenglykol, Diethylenglykol, 1,2-Propylenglykol, Dipropylenglykol, 1,3-Propandiol, 1,4-Butandiol, 1,6-Hexandiol, 2,2-Dimethyl-propandiol, 1,10-Dodekanol. Anteilsweise können auch weitere Diole oder Dicarbonsäuren mitverwendet werden. Geeignete Säuren sind beispielsweise Bernstein-, Glutar-, β-Methylglutar-, Adipin-, Pimelin-, Kork-, Azelain- und Sebazinsäure. Die Herstellung solcher Ester ist bekannt.

Sie finden üblicherweise bei der Polyurethanelastomer- oder Schaumstoffherstellung Verwendung.

Sauerstoffhaltige Diole wie z.B. Diethylenglykol oder 1,9-Dihydroxy-5-oxa-nonan oder auch verzweigte Polyole wie Trimethylolpropan können mitverwendet werden, solange sie leicht schmelzende und in den Polyamiden lösliche Polyester ergeben. Die Polyester(carbonat)-Schmelzpunkte liegen vorzugsweise unterhalb 120°C, vorzugsweise unterhalb 80°C.

Die Zusätze können auch als Copolyestercarbonate, z.B. auf Basis Kohlensäure, Adipinsäure und Diolen, vorliegen.

Die Herstellung der erfindungsgemäßen Mischungen aus dem handelsüblichen Polyamid und dem linearen aliphatischen Polyester erfolgt auf einem üblichen Zweiwellenextruder, vorzugsweise mit Entgasung. Die Schmelzcompoundierung wird bei Temperaturen oberhalb des Schmelzpunktes des Polyamids im Bereich von 220 bis 300°C, vorzugsweise im Bereich von 230 bis 270°C durchgeführt. Aus Gründen der besseren Dosierbarkeit und zur Erzielung einer homogeneren Verteilung werden die oligomeren Polyester vorzugsweise flüssig zudosiert. Dazu müssen die Polyester gegebenenfalls aufgeschmolzen werden.

Gegenstand der vorliegenden Erfindung ist weiterhin die Herstellung der Polyamid-Mischungen z.B. durch Vermischen in der Schmelze (z.B. Extrudern) oberhalb der Schmelztemperaturen der Polyamide.

Die erfindungsgemäßen Mischungen eignen sich zur Herstellung von kompostierbaren Verpackungen wie z.B. von Folien und dünnwandigen Spritzgußkörpern zur Lebensmittelverpackung; Erfindungsgegenstand is somit insbesondere ihre Verwendung für Verpackungen.

Die erfindungsgemäßen Mischungen können übliche Zusätze in für den Verwendungszweck angepaßten Mengen enthalten, z.B. Farbstoffe, Pigmente, Nährstoffzusätze wie Stärke,, Verfärbungsstabilisatoren, Gleitmittel, Antihaftmittel u.a., üblicherweise in Mengen von 0,01-2,5 Gew.-% im Gemisch.

### Experimenteller Teil

In einem Zweiwellenextruder wurden bei 240°C zu einem aufgeschmolzenen Polycaprolactam der relativen Viskosität 3,0 gemessen in meta-Kresol bei 30°C, M_{w}=52.000 und 10 Gew.-% eines verflüssigten Polyesters aus
A) Hexandiol-1,6- und Adipinsäure mit einem Molekulargewicht von 2000 g/mol
   oder
B) eines aliphatischen Polycarbonats auf Basis Hexandiol-1,6 flüssig zudosiert.

Aus diesem Materialien werden auf bekannte Weise 100 µm dicke Extrusionsfolien hergestellt. Die mechanischen Eigenschaften der Folien wurde nach normierten Verfahren (Zug-E-Modul nach DIN 53 457, Reißfestigkeit und Reißdehung nach DIN 53 455) bestimmt. Die Ergebnisse sind in Tabelle 1 zusammengefaßt.

**Tabelle 1**

| Folieneigenschaften von 100 µm-Extrusionsfolien | | | |
|---|---|---|---|
| Eigenschaft | A | B | Vergleich |
| E-Modul [N/mm²] | 1087 | 982 | 1191 |
| Reißfestigkeit N/mm²] | 431 | 315 | 272 |
| Reißdehnung [%] | 58 | 48 | 55 |

Der Einfluß der Lichtbestrahlung auf das Abbauverhalten wird mittels Atlas Weather-o-meter, Modell 65-WRC, Filter: Pyrex innen und außen, Brenner: 5400 W Xe-Brenner, Sprühzyklus: 102:18 (102 min Licht, 18 min Licht + Beregnung), Schwarztafeltemp.: 60°C ± 5, rel. Feuchte: 50 % ± 5.
- Bestrahlungsstärke:: 0,35 W/m² 340 nm
40 W/m² 300-400nm,
bestimmt.

Als Maß für die Abbaufähigkeit der zu untersuchenden Probe dient die Verringerung der Reißfestigkeit und der Reißdehnung, die nach einem normierten Verfahren (DIN 53 455) ermittelt werden.

Anschließend wurden die nach 1000 h Bewitterungszeit vorgeschädigten Folien einem normierten Test zur biologischen Abbaubarkeit unterworfen ASTM G 21-70. Die erzielten Ergebnisse sind in der folgenden Tabelle zusammengestellt. Als Vergleich wurde das Basispolyamid verwendet.

**Tabelle 2**

| Schädigung bei Bewitterung | | | |
|---|---|---|---|
| Reißfestigkeit [N/mm²] | A | B | Vergleich |
| nach 0h | 58,6 | 42,5 | 55,2 |
| nach 250h | 28,9 | 24,1 | 39,1 |
| nach 500h | 4,8 | 10,0 | 32,0 |
| nach 1000h | 4,8 | 4,2 | 28,5 |

| Reißdehnung [%] | A | B | Vergleich |
|---|---|---|---|
| nach 0h | 437,6 | 315 | 272,0 |
| nach 250h | 119,3 | 105 | 231,7 |
| nach 500h | 7,4 | 12,5 | 199,5 |
| nach 1000h | 6,8 | 7,2 | 119,1 |

**Tabelle 3**

| Beurteilung des Wachstums von Mikroorganismen auf bewitterten Polyamidfolien (nach ASTM G 21-70) | |
|---|---|
| Beispiel | Beurteilung |
| A | 4 |
| B | 3 |
| Vergleich | 1 |
| 0 = kein Wachstum 1 = < 10 % der Oberfläche bewachsen 2 = 10 - 30 % bedeckt (geringes Wachstum) 3 = 30 - 50 % bedeckt (mittleres Wachstum) 4 = 60 - 100 % bedeckt (starkes Wachstum) | |

## Patentansprüche

1. Abbaubare aliphatische Polyamid-Kompositionen auf Basis von Polycaprolactam oder Polyamiden auf Basis von aliphatischen Dicarbonsäuren und aliphatischen Diaminen jeweils mit 4 bis 6 Kohlenstoffatomen, oder Copolymeren aus diesen Bausteinen, durch Zusatz von linearen oder auf Basis von Trimethylolpropan aufgebauten oligomeren, aliphatischen Polyestern oder Polycarbonaten mit Molekulargewichten von 800-4000, in Mengen von 5 bis 25 Gew.-%.

2. Mischungen nach Anspruch 1, dadurch gekennzeichnet, daß die verwendeten Polyamide solche auf Basis Aminocaprolactam oder aus Adipinsäure und 1,6-Hexamethylendiamin und Copolymere aus diesen beiden, gegebenenfalls unter Verwendung weiterer (cyclo)aliphatischer Diamine, sind und die mittleren Gewichtsmolekulargewichte dieser Polyamide im Bereich von M_{w} = 12.000 bis 1.000.000.

3. Mischungen nach Ansprüchen 1 und 2, dadurch gekennzeichnet, daß die Polyester aus Basis von Dicarbonsäuren mit 2-10 C-Atomen und Diolen mit 2-10 C-Atomen und die Polycarbonate auf Basis von Diolen mit 2-10 C-Atomen aufgebaut sind.

4. Mischungen nach Ansprüchen 1-3, dadurch gekennzeichnet, daß die Polyester oder Polycarbonate Molekulargewichte von 1000-3000 besitzen.

5. Verwendung der erfindungsgemäßen Mischungen nach Ansprüchen 1-4 zur Herstellung von kompostierbaren Verpackungen.

## Claims

1. Degradable aliphatic polyamide compositions based on polycaprolactam or polyamides based on aliphatic dicarboxylic acids and aliphatic diamines in each case having 4 to 6 carbon atoms, or copolymers of these structural units, by addition of oligomeric, aliphatic polyesters or polycarbonates, which polyesters or polycarbonates are linear or built up on the basis of trimethylolpropane and have molecular weights of from 800 to 4000, in quantities of from 5 to 25% by weight.

2. Mixtures according to claim 1, characterised in that the polyamides used are those based on aminocaprolactam or on adipic acid and 1,6-hexamethylenediamine and copolymers of these two, optionally together with other (cyclo)aliphatic diamines, and that the weight average molecular weights M_{w} of these polyamides are in the range of from 12,000 to 1,000,000.

3. Mixtures according to claims 1 and 2, characterised in that the polyesters are built up on the basis of dicarboxylic acids having 2 to 10 C atoms and diols having 2 to 10 C atoms and the polycarbonates on the basis of diols having 2 to 10 C atoms.

4. Mixtures according to claims 1 to 3, characterised in that the polyesters or polycarbonates have molecular weights of from 1000 to 3000.

5. Use of the mixtures according to the invention as claimed in claims 1 to 4 for the production of decomposable packaging.

## Revendications

1. Compositions de polyamides aliphatiques à base de polycaprolactame ou de polyamides d'acides dicarboxyliques aliphatiques et de diamines aliphatiques contenant chacun de 4 à 6 atomes de carbone, ou de copolymères des mêmes composants, rendues dégradables par adjonction de polyesters ou de polycarbonates aliphatiques oligomères linéaires ou à base du triméthylolpropane, à des poids moléculaires de 800 à 4 000, en quantité de 5 à 25 % en poids.

2. Mélanges selon la revendication 1, caractérisés en ce que les polyamides utilisés sont à base d'aminocaprolactame ou de l'acide adipique et de la 1,6-hexaméthylènediamine ou consistent en copolymères de ces deux types, le cas échéant avec adjonction d'autres diamines (cyclo)aliphatiques, et les poids moléculaires moyens (moyenne en poids) de ces polyamides se situent dans l'intervalle M_{w}=12 000 à 1 000 000.

3. Mélanges selon les revendications 1 et 2, caractérisés en ce que les polyesters sont à base d'acides dicarboxyliques en C₂-C₁₀ et de diols en C₂-C₁₀ et les polycarbonates à base de diols en C₂-C₁₀.

4. Mélanges selon les revendications 1 à 3, caractérisés en ce que les polyesters ou polycarbonates ont des poids moléculaires de 1 000 à 3 000.

5. Utilisation des mélanges selon l'invention, selon les revendications 1 à 4, pour la fabrication d'emballages compostables.
